# FASCICULE DE BREVET EUROPEEN

(11) **EP 0 395 467 B1**
(45) Date de publication et mention de la délivrance du brevet: **07.09.1994**
(21) Numéro de dépôt: 90400964.4
(22) Date de dépôt: 10.04.1990
(51) Int. Cl.: C03B 23/025, C03B 23/023, C03B 27/044, C03B 35/24, C03B 35/20

(54) **Procédé et dispositif pour bomber et tremper les feuilles de verre**
Verfahren und Vorrichtung zum Biegen und Härten von Glasscheiben
Method and apparatus for bending and tempering glass sheets

(30) Priorité: 25.04.1989 DE 3913571
(43) Date de publication de la demande: 31.10.1990
(73) Titulaire: SAINT-GOBAIN VITRAGE INTERNATIONAL, 92400 Courbevoie (FR); VEGLA Vereinigte Glaswerke GmbH, D-52066 Aachen (DE)
(72) Inventeur: Vanaschen, Luc, B-4700 Eupen (BE); Kuster, Hans-Werner, D-5100 Aachen (DE)
(74) Mandataire: Menes, Catherine

(56) Documents cités:
- WO-A-89/01458
- DE-A- 640 892
- FR-A- 1 538 691
- LU-A- 65 146
- US-A- 2 223 124

## Description

L'invention a pour objet un procédé et un dispositif de bombage et de trempe de feuilles de verre. Plus précisément, l'invention a trait aux techniques de bombage et de trempe dans lesquelles la feuille de verre est réchauffée en position horizontale jusqu'à l'obtention de sa température de bombage, est saisie au-dessus de son transporteur par une plaque aspirante qui la laisse tomber sur un anneau de bombage à profil périphérique concave dont la feuille de verre acquiert la courbure et sur lequel elle est trempée par soufflage d'air froid sur ses deux faces.

Les techniques de bombage ci-dessus évoquées, connues par exemple des brevets EP-A-3 391 et EP-A-164 823, sont en pratique largement utilisées. Dans ces techniques, l'anneau de bombage est introduit dans le four, une fois la feuille de verre soulevée par la plaque aspirante, reçoit la feuille de verre puis est évacué hors du four (avec la feuille de verre bombée) conduite ainsi dans la station de trempe disposée à côté du four.

Cette technique de bombage/trempe très performante pour la réalisation de vitrages à faible rayon de courbure tels des vitres latérales de véhicules automobiles. Toutefois, les cadences de production sont limitées par les temps de transfert de l'anneau entre le four et la station de bombage et le temps de la prise en charge de la feuille de verre par la plaque aspirante.

Du brevet DE-A-2 000 271, on connaît un procédé sans anneau de bombage selon lequel la feuille de verre est soulevée au-dessus de son transporteur au moyen d'une forme aspirante déplacée horizontalement, appliquée par effet de succion contre la forme aspirante, amenée avec la forme aspirante entre les caissons de soufflage et y est redéposée sur le transporteur à bande qui s'étend du four de réchauffage au dispositif de refroidissement. Pendant le processus de trempe, la feuille de verre repose directement sur le transporteur à bande ce qui peut entraîner des défauts optiques importants.

Dans la demande de brevet DE-A-3 640 892, il est de plus décrit une plaque aspirante faisant le va-et-vient entre un four à rouleaux à une station de bombage. Dans ce cas, la feuille de verre est déposée sur une forme dans la station de bombage, la forme de bombage étant constituée d'un cadre de bombage et d'une forme pleine remplissant l'espace intérieur du cadre. Le bombage de la feuille de verre est obtenu au moyen d'un courant gazeux chaud descendant dirigé vers la feuille de verre. La feuille de verre bombée est ensuite amenée dans la station de trempe par le cadre de bombage. Ce procédé permet l'obtention de formes plus complexes mais non une augmentation des cadences de production.

Il est par ailleurs connu du brevet LU-65146 une technique de bombage/trempe qui consiste à amorcer la trempe des feuilles de verre pendant qu'elles subissent le bombage : les feuilles sont réchauffées, en mouvement sur un convoyeur, puis soulevées sur un moule où elles se courbent sous l'action conjuguée de l'inertie et de la gravité, puis sont descendues sur ledit moule afin de poursuivre leur mouvement. Pendant que les feuilles sont soulevées sur le moule donc pendant leur bombage, elles sont refroidies brusquement, à l'aide de rampes de soufflage, sur leurs deux faces.

L'invention a pour but de modifier et développer le procédé de bombage/trempe mentionné en préambule en vue d'une diminution des temps de cycles et donc une augmentation de la productivité de l'installation.

Conformément au préambule de la revendication 1, le procédé de bombage et de trempe comporte une phase de réchauffage de la feuille de verre, en position horizontale, jusqu'à l'obtention de sa température de bombage, une phase de saisie au-dessus d'un transporteur par une plaque aspirante mobile qui l'amène au-dessus d'un anneau de bombage périphérique à profil concave sur lequel la feuille de verre est lâchée et au contact duquel elle se bombe et enfin une phase de trempe par soufflage d'air froid sur les deux faces de la feuille de verre. Selon l'invention, la feuille de verre saisie dans le four de réchauffage par la plaque aspirante, est amenée dans une station combinée de bombage et de trempe située hors du four où elle est lâchée sur l'anneau de bombage se trouvant entre deux caissons de soufflage et trempée dans cette position dès le retrait de la plaque aspirante, l'anneau de bombage servant à évacuer la feuille de verre hors de la station combinée de bombage/trempe.

Ce procédé peut être mis en oeuvre par un dispositif comportant un four de réchauffage à rouleaux, une plaque aspirante déplacée entre la section terminale du four et une station de bombage qui comprend un anneau de bombage périphérique à profil concave disposé sur un chariot mobile qui est caractérisé par deux caissons de soufflage de trempe de feuilles de verre disposés dans la station de bombage même, à l'extérieur du four.

Par les mesures selon l'invention, la capacité de production de l'installation est accrue de façon très importante en raison de la suppression d'une étape du procédé, à savoir celle du transfert de la feuille de verre bombée entre la station de bombage et la station de transport.

De plus, les auteurs de la présente invention ont constaté que ce procédé fournit des feuilles de verre qui présentent un bombage transversal nettement plus faible que celui observé pour des feuilles de verre produites par les procédés selon l'art.

Par bombage transversal, on entend pour ce type de procédé la courbure transversale qui apparaît dans la partie centrale de la feuille de verre et qui est due à l'affaissement du verre sous l'effet de son propre poids. En tant que telle, cette courbure transversale n'est généralement pas souhaitée, mais est toutefois inévitable.

Cette amélioration inattendue du modelage s'explique par le fait que dans les procédés connus, le bombage transversal apparaît essentiellement lors de la phase de transfert qui se situe entre la phase de bombage proprement dite et la phase de trempe. Selon l'invention, cette phase de transfert est supprimée et la phase complète de bombage peut se dérouler exclusivement pendant la durée dont la feuille de verre a besoin pour que son contour initialement plan vienne reposer entièrement sur l'anneau périphérique de bombage. Dans cette phase de bombage proprement dite, la périphérie de la feuille de verre ne repose tout d'abord que sur certaines zones de l'anneau périphérique de bombage. Le poids de la feuille de verre - ou plus exactement son énergie cinétique - ne peut évidemment pas contribuer dans cette première phase au bombage transversal de la partie centrale de la feuille de verre, mais est utilisé pour conférer à la feuille de verre le bombage cylindrique souhaité le long de la ligne de support de la feuille de verre. Ce n'est que lorsque la feuille de verre repose également sur la partie la plus basse de l'anneau concave que son poids d'une part et les points de contact avec cette partie la plus basse d'autre part peuvent former un moment de forces qui conduit au bombage transversal indésiré. Mais à l'instant où ce moment de forces se forme, le processus de bombage proprement dit est déjà achevé. Comme cet instant correspond sans temporisation aucune au début du processus de trempe qui interrompt brutalement toute possibilité supplémentaire de déformation de la feuille de verre, on comprend que le procédé selon l'invention évite la formation du bombage transversal.

L'invention propose ainsi un procédé qui permet non seulement la réduction des temps de cycles de l'installation en préservant tous les avantages de ce type de procédé, mais aussi une amélioration sensible de la qualité du bombage en matière de conformité au galbe.

Dans une variante avantageuse de l'invention, deux anneaux de bombage sont disposés l'un à côté de l'autre, déplacés de façon synchronisée, les feuilles de verre étant lâchées par la plaque aspirante tout à tour sur l'un ou l'autre des anneaux de bombage. De cette manière, au moment où une première feuille de verre trempée sort de la station combinée de bombage/trempe, une seconde feuille peut déjà y pénétrer et y être bombée pendant que se déroule l'opération de déchargement de la première feuille ce qui permet à nouveau une réduction des temps de cycles.

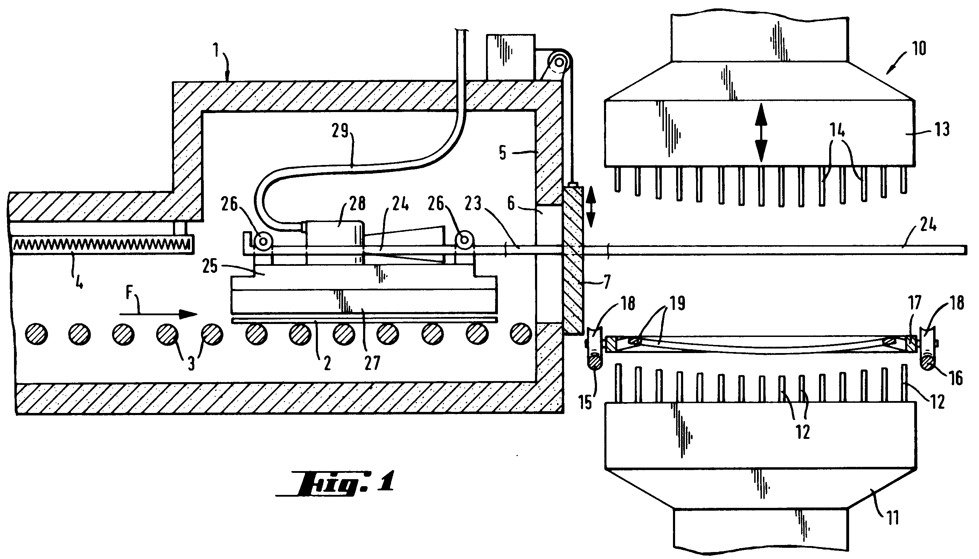

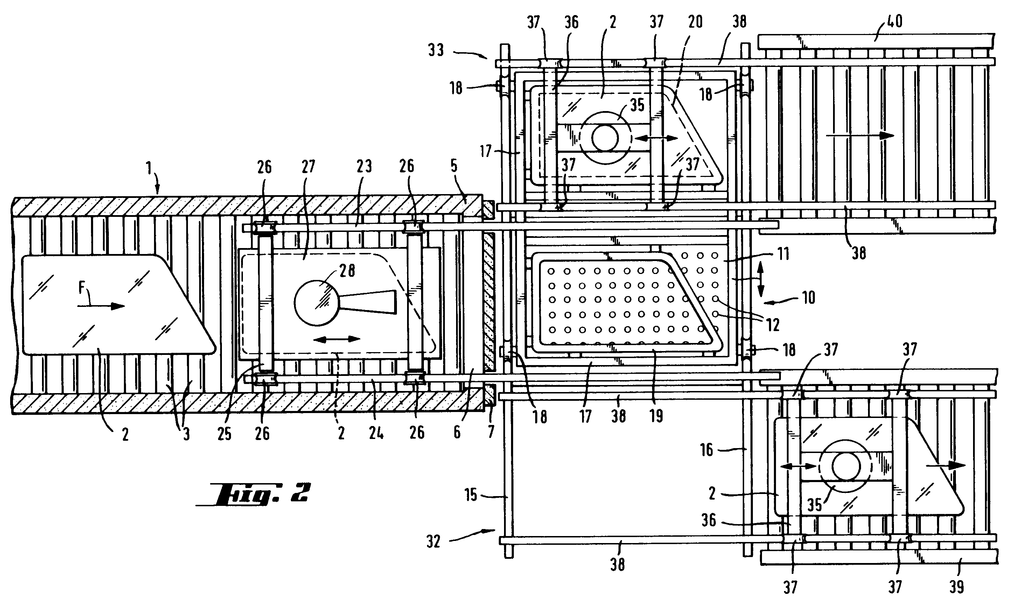

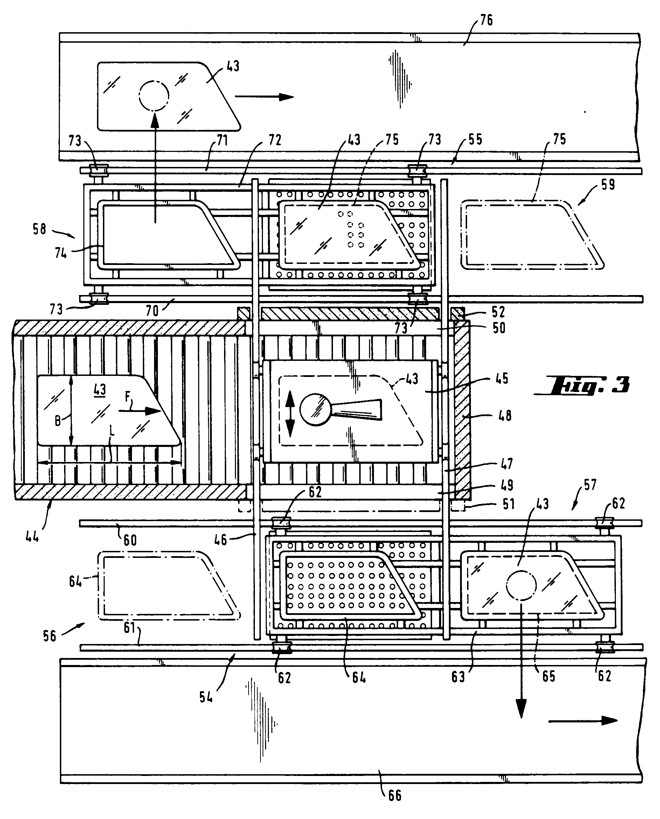

D'autres détails et caractéristiques avantageuses de l'invention ressortent de la description faite ci-après en référence aux dessins annexés qui représentent :
. **figure 1** : une coupe partielle, vue en élévation d'une installation de bombage/trempe conforme à un premier mode de réalisation de l'invention,
. **figure 2** : une vue de plan de l'installation représentée à la figure 1,
. **figure 3** : une vue de plan d'une installation de bombage/trempe conforme à un autre mode de réalisation de l'invention.

L'installation de bombage/trempe représentée aux figures 1 et 2 est une installation dite en ligne, avec une station de bombage/trempe disposée dans l'axe du four de réchauffage des feuilles de verre à la température de bombage.

Le four 1 est un four traversant d'un type usuel au travers duquel les feuilles de verre 2 sont transportées par des rouleaux moteurs 3 à vitesse constante, suivant la direction de la flèche F. Les feuilles de verre 2 sont réchauffées à la température de bombage d'environ 650° C par des résistances chauffantes électriques 4. Une ouverture 6, fermée par une porte 7, est prévue dans le mur frontal du four 1.

La station combinée de bombage/trempe est juste à l'arrière du four 1 et comprend un caisson inférieur de soufflage 11 avec des buses de soufflage 12 dirigées vers le haut et un caisson de soufflage supérieur 13 dont la face inférieure est munie de buses de soufflage 14. Le caisson de soufflage supérieur 13 est muni d'un dispositif de montée-baisse. Des rails 15, 16 perpendiculaires à l'axe du four sont montés entre les deux caissons de soufflage 11 et 13. Un chariot 17, ici en forme de cadre, est déplacé par des roues 18 sur ces rails 15, 16. Deux anneaux de bombage 19 et 20 sont disposés sur ce cadre, espacés l'un de l'autre d'une certaine distance.

Deux rails 23 et 24 parallèles à l'axe du four servent au guidage des roues 26 d'un chariot 25 portant une plaque aspirante 27 et faisant la navette entre la portion terminale du four et la station combinée de bombage/trempe 10. Une pompe à vide 28 également portée par le chariot 25 sert à créer une aspiration suffisante pour soulever les feuilles de verre et les transporter dans la station de bombage/trempe 10. Les câbles de commande de la plaque aspirante et des mouvements du chariot 25 passent au travers du plafond du four grâce à un flexible 29.

Comme il ressort de la figure 2, l'installation comprend de plus deux stations de déchargement 32 et 33 disposées des deux côtés de la station combinée de bombage et de trempe 10. Le cadre 17 pénètre au moyen des rails 15 et 16 dans les stations de déchargement 32 et 33 de façon à autoriser le déchargement de l'anneau de bombage 19 dans la station 32 ou respectivement dans la station 33. Dans chacune des deux stations de déchargement 32 et 33, on retrouve une ventouse 35 disposée sur un chariot 36 déplacé par des roues 37 le long des rails 38. La ventouse 35 permet de déposer les feuilles de verre bombées et trempées au-dessus d'un convoyeur 39 ou respectivement 40 qui prolonge la station de déchargement 32 ou respectivement 33 et recueille les feuilles de verre bombées.

L'installation travaille de la manière décrite ci-après. La feuille de verre 2 est réchauffée dans le four traversant 1 à sa température de bombage d'environ 650°C. Dès que la feuille de verre 2 a atteint une position définie sous la plaque aspirante 27 disposée au même instant à l'intérieur du four, la pompe à vide 28 est mise en route et la plaque aspirante 27 soulève la feuille de verre 2 au-dessus des rouleaux 3. La porte 7 est alors ouverte et le chariot 25 portant la plaque aspirante 27 sortent par l'ouverture 6 et pénètrent dans la station combinée de bombage et de trempe 10. Le caisson de soufflage supérieur 13 est à ce moment là en position haute. L'anneau périphérique de bombage 19 est positionné dans la station 10 au plus tard au moment où le chariot 25 atteint sa position dans cette même station 10. L'anneau de bombage 19 et la plaque aspirante 27 en place, la feuille de verre est lâchée par la plaque aspirante 27. Elle tombe sur l'anneau périphérique de bombage 19 dont elle prend la courbure sous l'effet de son propre poids et de son énergie cinétique.

La feuille de verre 2 relâchée, le chariot 25 retourne dans le four 1 et la porte 7 est refermée. Le caisson de soufflage supérieur 13 est alors descendu et le soufflage de trempe commence. A la fin de ce processus de soufflage, le caisson de soufflage 13 est ramené en position haute, le cadre 17 portant l'anneau de bombage 19 se déplace pour permettre un déchargement de l'anneau de bombage 19 dans la station de déchargement 32 alors que l'anneau de bombage 20 se trouve dans la station combinée de bombage/trempe.

Pendant le déchargement de l'anneau périphérique de bombage 19, l'anneau périphérique de bombage 20 prend en charge la feuille de verre suivante. Le processus de bombage/trempe décrit se répète et la feuille de verre bombée et trempée sur l'anneau 20 est déchargée dans la station de déchargement 33 puis déposée sur le convoyeur 40. Le processus se repète pour un nouveau couple de feuilles de verre.

L'installation représentée à la figure 3 se distingue de l'installation des figures 1 et 2, en ce que la sortie des feuilles de verre 43 ne s'effectue pas dans l'axe du four mais latéralement. Dans ce but, la plaque aspirante 45 est déplacée perpendiculairement à l'axe du four sur des rails 46 et 47. Ceci permet de réduire le temps nécessaire pour le transport des feuilles de verre dans la station de bombage/trempe car la largeur B des feuilles de verre est inférieure à leur longueur L parallèle à l'axe. Le chemin que doit donc parcourir la feuille de verre est de ce fait plus court. On peut encore augmenter la capacité d'une telle installation si des sorties sont prévues des deux côtés du four, conformément à l'exemple de réalisation représenté à la figure 3.

Comme il ressort de la figure 3, le four traversant 44 comporte une paroi frontale 48 fermée et des ouvertures de côté 49 et 50 se faisant face, respectivement fermées par des portes 51 et 52. La plaque aspirante 45 se déplaçant sur les rails 46 et 47 sort les feuilles de verre en alternance soit par l'ouverture 49 (le bombage s'effectuant alors dans la station 54) soit par l'ouverture 50 (le bombage s'effectuant alors dans la station 55).

Deux stations de déchargement 56, 57 (et respectivement 58, 59) sont prévues pour chacune des ces stations de bombage/trempe (54 (et respectivement 55).

La station de bombage/trempe 54 est reliée aux stations de déchargement 56 et 57 par des rails 60 et 61 parallèles à l'axe du four guidant les roues 62 d'un chariot 63 portant deux anneaux périphériques de bombage 64, 65 écartés d'une distance correspondant à la distance entre la station de bombage/trempe 54 et l'une ou l'autre des stations de déchargement 56, 57. Pendant qu'une feuille de verre est bombée et trempée dans la station 54 sur l'anneau 64, la feuille de verre précédente est simultanément déchargée dans la station 57 et déposée sur le convoyeur 66. Le dispositif de déchargement est d'un type usuel et de ce fait n'a pas été représenté ici par souci de clarté.

On retrouve la même construction de l'autre côté du four où les stations de déchargement 58 et 59 sont reliées à la station de bombage/trempe 55 par des rails 70, 71 parallèles à l'axe du four qui guident les roues 73 d'un chariot 72 portant deux anneaux périphériques de bombage 74 et 75. De la même façon que les anneaux 64 et 65 ces anneaux périphériques 74 et 75 sont déchargés tour à tour dans les stations de déchargement 58 et 59 où les feuilles de verre sont prises en charge par un dispositif ici non représenté qui les dépose sur le convoyeur 76.

## Revendications

1. Procédé de bombage et de trempe d'une feuille de verre selon lequel la feuille de verre (2 ; 43) est réchauffée en position horizontale jusqu'à l'obtention de sa température de bombage, est saisie au-dessus d'un transporteur (3) par une plaque aspirante (27 ; 45) mobile qui l'amène au-dessus d'un anneau de bombage périphérique à profit concave (19, 20 ; 64, 65 ; 74, 75), est lâchée sur cet anneau de bombage dont elle acquiert la courbure et sur lequel elle est trempée par soufflage d'air froid sur ses deux faces, **caractérisé en ce que** la feuille de verre (2 ; 43) saisie dans le four de réchauffage par la plaque aspirante (27 ; 45) est amenée hors du four dans une station combinée de bombage et de trempe où elle est lâchée sur l'anneau de bombage se trouvant entre deux caissons de soufflage (11 ; 13) et trempée dans cette position dès le retrait de la plaque aspirante (27 ; 45), l'anneau de bombage servant à évacuer la feuille de verre (2 ; 43) hors de la station combinée de bombage/trempe (10 ; 54 ; 55).

2. Dispositif pour la mise en oeure du procédé selon la revendication 1 comportant un four de réchauffage (1 ; 44) à rouleaux (3), une plaque aspirante (27 ; 45) déplacée entre la section terminale du four et une station de bombage (10 ; 54 ; 55) comprenant un anneau de bombage périphérique à profil concave (19, 20 ; 64, 65 ; 74, 75) disposé sur un chariot mobile (17 ; 63 ; 72), **caractérisé en ce que** deux caissons de soufflage de trempe (11 ; 13) de feuilles de verre sont disposés dans la station de bombage même, à l'extérieur du four.

3. Dispositif selon la revendication 2, **caractérisé en ce que** deux anneaux de bombage périphérique (19, 20 ; 64, 65 ; 74, 75) sont disposés sur un chariot commun (17 ; 63 ; 72) déplacé sur des rails (15, 16 ; 60, 61 ; 70, 71) montés perpendiculaires à la direction de déplacement de la plaque aspirante (27 ; 45), deux stations de déchargement (32, 33 ; 56, 57 ; 58, 59) fonctionnant alternativement étant prévues à côté de la station combinée de bombage/trempe (10 ; 54 ; 55).

4. Dispositif selon la revendication 3, **caractérisé en ce que** la station combinée de bombage/trempe (10) est disposée dans l'axe du four (1), derrière celui-ci, le chariot (17) portant les deux anneaux de bombage périphérique (19, 20) se déplaçant perpendiculairement à l'axe du four **et en ce qu**'un convoyeur horizontal (39 ; 40) est prévu dans chacune des deux stations de déchargement (32 ; 33) pour la prise en charge des feuilles de verre (2) bombées/trempées.

5. Dispositif selon la revendication 3, **caractérisé en ce que** la station combinée de bombage/trempe (54 ; 55) est disposée à côté du four (1) **et en ce que** le chariot (63 ; 72) portant les deux anneaux de bombage périphérique (64, 65 ; 74, 75) est déplacé selon une direction parallèle à l'axe du four (44).

6. Dispositif selon la revendication 5, **caractérisé en ce que** le four (44) présente deux ouvertures (49 ; 50) se faisant face, pratiquées dans les parois latérales de la section terminale du four, une station combinée de bombage/trempe (54 ; 55) étant disposée devant chacune de ces ouvertures (49 ; 50), la plaque aspirante (45) se déplaçant perpendiculairement à l'axe du four alimentant tour à tour l'une ou l'autre des stations combinées (54 ; 55).

## Claims

1. Method of bending and toughening a glass sheet, according to which the glass sheet (2; 43) is reheated in a horizontal position until its bending temperature is reached, is seized above a conveyor (3) by a movable suction plate (27; 45), which brings it above a peripheral bending ring having a concave profile (19, 20; 64, 65; 74, 75), is released onto this bending ring, the curvature of which it acquires and upon which it is toughened by blowing cold air onto both its faces, characterized in that the glass sheet (2; 43), seized in the reheating furnace by the suction plate (27; 45) is brought out of the furnace into a combined bending and toughening station, where it is released onto the bending ring situated between two blowing boxes (11; 13) and is toughened in this position as soon as the suction plate (27; 45) is withdrawn, the bending ring serving for removing the glass sheet (2; 43) out of the combined bending/toughening station (10; 54; 55).

2. Device for carrying out the method according to Claim 1, comprising a reheating furnace (1; 44) having rollers (3), a suction plate (27; 45) moving between the end section of the furnace and a bending station (10; 54; 55) comprising a peripheral bending ring having a concave profile (19, 20; 64, 65; 74, 75) disposed on a movable carriage (17; 63; 72), characterized in that two toughening blowing boxes (11; 13) for glass sheets are disposed in the bending station itself, outside the furnace.

3. Device according to Claim 2, characterized in that two peripheral bending rings (19, 20; 64, 65; 74, 75) are disposed on a common carriage (17; 63; 72) moving on rails (15, 16; 60, 61; 70, 71) mounted perpendicularly to the direction of displacement of the suction plate (27; 45), two alternately operating unloading stations (32, 33; 56, 57; 58, 59) being provided alongside the combined bending/toughening station (10; 54; 55).

4. Device according to Claim 3, characterized in that the combined bending/toughening station (10) is disposed in the axis of the furnace (1) behind the furnace, the carriage (17) carrying the two peripheral bending rings (19, 20) moving perpendicularly to the axis of the furnace, and in that a horizontal conveyor (39; 40) is provided in each of the two unloading stations (32; 33) for taking over the bent/toughened glass sheets (2).

5. Device according to Claim 3, characterized in that the combined bending/toughening station (54; 55) is disposed alongside the furnace (1) and in that the carriage (63; 72) carrying the two peripheral bending rings (64, 65; 74, 75) is displaced in a direction parallel to the axis of the furnace (44).

6. Device according to Claim 5, characterized in that the furnace (44) has two openings (49; 50) facing each other, formed in the lateral walls of the last section of the furnace, a combined bending/toughening station (54; 55) being disposed before each of these openings (49; 50), the suction plate (45) moving perpendicularly to the axis of the furnace and supplying the one and the other of the combined stations (54; 55) in turn.

## Patentansprüche

1. Verfahren zum Biegen und Vorspannen einer Glasscheibe, bei dem die Glasscheibe (2;43) in horizontaler Lage auf ihre Biegetemperatur, erwärmt oberhalb eines Förderers (3) durch eine verfahrbare Saugplatte (27;45) ergriffen und über einen konkaven Umfangsbiegering (19,20;64,65;74,75) verbracht, durch Fallenlassen auf den Umfangsbiegering gebogen, und auf dem Umfangsbiegering durch beidseitiges Aufblasen von Kühlluft vorgespannt wird, **dadurch gekennzeichnet**, daß die Glasscheibe (2;43) innerhalb des Ofens von der Saugplatte (27;45) ergriffen, aus dem Ofen heraus in eine kombinierte Biege- und Vorspannstation verbracht, dort auf den zwischen zwei Blaskästen (11;13) befindlichen Biegering abgeworfen und in dieser Position nach Zurückfahren der Saugplatte (27;45) vorgespannt wird, und daß der Biegering für den Transport der Glasscheibe (2;43) aus der kombinierten Biege-Vorspann-Station (10;54;55) heraus dient.

2. Vorrichtung zur Durchführung des Verfahrens nach Anspruch 1 mit einem mit Transportrollen (3) versehenen Erwärmungsofen (1;44) und einer zwischen dem letzten Ofenabschnitt und einer Biegestation (10;54;55) verfahrbaren Saugplatte (27;45), wobei die Biegestation einen konkaven, auf einem verfahrbaren Wagen (17;63;72) angeordneten Umfangsbiegering (19,20; 64,65; 74,75) umfaßt, dadurch gekennzeichnet, daß zwei Blaskästen (11;13) für die Glasscheiben außerhalb des Ofens unmittelbar in der Biegestation angeordnet sind.

3. Vorrichtung nach Anspruch 2, dadurch gekennzeichnet, daß zwei Umfangsbiegeringe (19,20; 64,65; 74,75) auf einem gemeinsamen, auf Schienen (15,16; 60,61; 70,71) verfahrbaren Wagen (17;63;72) angeordnet sind, wobei die Schienen quer zur Bewegungsrichtung der Saugplatte (27;45) verlaufen und zwei Entladestationen (32,33; 56,57; 58,59) seitlich der kombinierten Biege-Vorspann-Station (10;54;55) vorgesehen sind, die abwechselnd in Tätigkeit treten.

4. Vorrichtung nach Anspruch 3, dadurch gekennzeichnet, daß die kombinierte Biege-Vorspann-Station (10) in der Achse des Ofens (1) hinter diesem angeordnet und der die beiden Umfangsbiegeringe (19,20) tragende Wagen (17) quer zur Ofenachse verfahrbar ist, und daß in den beiden Entladestationen (32) jeweils ein Horizontalförderer (39;40) für die Übernahme der gebogenen und vorgespannten Glasscheiben (2) vorgesehen ist.

5. Vorrichtung nach Anspruch 3, dadurch gekennzeichnet, daß die kombinierte Biege-Vorspann-Station (54;55) neben dem Ofen (1) angeordnet ist, und daß der die beiden Umfangsbiegeringe (64,65; 74,75) tragende Wagen (63;72) in Richtung parallel zur Achse des Ofens (44) verfahrbar ist.

6. Vorrichtung nach Anspruch 5, dadurch gekennzeichnet, daß der Ofen (44) in den Seitenwänden des letzten Ofenabschnitts zwei einander gegenüber angeordnete Öffnungen (49;50) aufweist, daß vor jeder dieser Öffnungen (49;50) eine kombinierte Biege-Vorspann-Station (54;55) angeordnet ist, und daß die quer zur Ofenachse verfahrbare Saugplatte (45) abwechselnd die eine oder die andere der kombinierten Stationen (54;55) versorgt.
